# EUROPÄISCHE PATENTSCHRIFT

(11) **EP 0 717 726 B1**
(45) Veröffentlichungstag und Bekanntmachung des Hinweises auf die Patenterteilung: **16.04.1997**
(21) Anmeldenummer: 94927595.2
(22) Anmeldetag: 09.09.1994
(51) Int. Cl.: C04B 35/597, C04B 35/65

(54) **VERFAHREN ZUR HERSTELLUNG VON FEUERFESTEN WERKSTOFFEN**
PROCESS FOR PRODUCING REFRACTORY MATERIALS
PROCEDE DE PRODUCTION DE MATERIAUX REFRACTAIRES

(30) Priorität: 09.09.1993 DE 4330584
(43) Veröffentlichungstag der Anmeldung: 26.06.1996
(73) Patentinhaber: Dolomitwerke GmbH, D-42489 Wülfrath (DE); FRAUNHOFER-GESELLSCHAFT ZUR FÖRDERUNG DER ANGEWANDTEN FORSCHUNG E.V., 80636 München (DE)
(72) Erfinder: RICHTER, Hans-Jürgen, D-01257 Dresden (DE); SCHOBER, Reiner, D-01219 Dresden (DE); PUTZKY, Gerhard, D-01157 Dresden (DE); KÖNIG, Gert, D-47506 Neukirchen-Vluyn (DE)
(86) Internationale Anmeldenummer: EP9403019
(87) Internationale Veröffentlichungsnummer: WO9507247

(56) Entgegenhaltungen:
- EP-A- 0 242 849
- DE-A- 2 300 547
- DE-A- 2 805 292
- PATENT ABSTRACTS OF JAPAN vol. 014, no. 131 (C-0700) 13. März 1990 & JP,A,02 006 371 (KAWASAKI STEEL CORP) 10. Januar 1990
- BRITISH CERAMIC TRANSACTIONS AND JOURNAL, Bd.88, Nr.5, September 1910, STOKE ON TRENT Seiten 157 - 161 MORRISON & AL. 'In-situ formation of sialons in refractories containing silicon carbide'

## Beschreibung

Die Erfindung bezieht sich auf die Gebiete der Keramik und Metallurgie und betrifft ein Verfahren zur Herstellung von feuerfesten Werkstoffen auf der Basis eines SiAlON/C- oder SiAlON/SiC/C- Komposits, der auch als Binder für einen feuerfesten Füllstoff dienen kann.

Entscheidend für die Anwendung dieser Werkstoffe sind gute Korrosionsbeständigkeit gegenüber schmelzflüssigen Metallen und Schlacken, sowie eine hohe Temperaturwechselbeständigkeit.

Feuerfeste Werkstoffe bestehen im allgemeinen aus relativ grobkörnigen Füllstoffen und einer feinkörnigen Matrix, die als Binder fungiert und die Eigenschaften des Komposits wesentlich bestimmt. Als feuerfeste Füllstoffe sind u.a. Schamotte, Korund, MgO und SiC bekannt.

Zur Verbesserung der Korrosionsbeständigkeit und der thermoelastischen Eigenschaften werden der oxidischen Matrix, z.B. MgO oder Al₂O₃, Kohlenstoff in Form von Graphit oder Pech als Binder zugesetzt.

Aufgrund der guten Korrosionsbeständigkeit von SiAlON und BN gegenüber metallischen Schmelzen werden auch Werkstoffe angewandt, die diese Komponenten enthalten.

So ist beispielsweise aus der DE 41 09 375 A1 ein Verfahren zur Herstellung eines SiAlON, gegebenenfalls auch BN enthaltenden Verbundwerkstoffes, bekannt, der Verwendung finden kann zur Herstellung von Schieberplatten, Tauchausgüssen oder Steinen für die Auskleidung von metallurgischen Gefäßen, wie Öfen, Konvertern oder Pfannen. Im Temperaturbereich bis 1600 °C bildet sich bei genügender Haltezeit eine Mischung aus SiAlON und SiC. Die gebrannten Formkörper weisen eine scheinbare Porosität zwischen 17 und 29 % auf.

So wird beispielsweise nach der EP 0153000 als Matrix für einen feuerfesten Füllstoff ein separat gefertigtes SiAlON-Pulver vorgeschlagen, bei dem ein Harz als Binder eingesetzt wird.

Nach der EP 0242845 wird ein kohlenstoffgebundener feuerfester Körper aus einer Mischung von Kohlenstoff, SiAlON-Pulver, SiC, SiO₂, Si, Korund oder anderen feuerfesten Materialien und einem borhaltigen Stoff, wie z.B. Boroxid, als Sinterhilfsmittel hergestellt.

In der EP 0482984 wird eine breite Palette an SiAlON/Graphit- Werkstoffen mit unterschiedlichsten Zusätzen genannt, bei denen die SiAlON-Phase auf dem Wege der direkten Nitridierung unter Stickstoff aus einem Gemisch aus Silicium-, Aluminium- und Aluminiumoxidpulver hergestellt wird.
Aus experimentellen Erfahrungen und der Thermodynamik ist jedoch bekannt, daß die Beständigkeit gegenüber den korrosiven Medien und das Grenzflächenverhalten insbesondere im Kontakt mit Kohlenstoff vom Typ der SiAlON-Phase abhängen.
Die vollständige Umwandlung zu einem SiAlON der Form Si_{6-z}Al_{z}O_{z}N_{8-z} mit z = 2...3 erfordert deshalb die Einhaltung definierter Reaktionsbedingungen.

Die Nitridierung unter Stickstoff, wie in der EP 0482984 vorgeschlagen, ist mit dem Nachteil behaftet, daß eine reaktionsbedingte Porosität durch die Reaktion des Kohlenstoffs mit den oxidischen oder nitridischen Phasen entsteht.

Die Aufgabe der Erfindung besteht darin, ein Verfahren zur Herstellung von feuerfesten Werkstoffen anzugeben, bei dem die Porositätserhöhung infolge der Reaktion des Kohlenstoffs mit den oxidischen oder nitridischen Phasen des Materials verhindert wird.

Die Aufgabe wird durch die in den Ansprüchen angegebene Erfindung gelöst.

Mit dem erfindungsgemäßen Verfahren werden feuerfeste Werkstoffe hergestellt, die SiAlON und Kohlenstoff oder SiALON/SiC und Kohlenstoff enthalten.
Die Herstellung erfolgt, indem zur Herstellung eines feuerfesten Werkstoffs mit SiAlON und Kohlenstoff ein Gemisch, das Silicium, Aluminium, Aluminiumoxid und Kohlenstoff enthält, nach dem Pressen zu Formkörpern in einer überwiegend Stickstoff enthaltenden Atmosphäre bis auf Temperaturen von maximal 2200 °C aufgeheizt wird.
Dabei wird der Aufheizvorgang in Stufen eingeteilt. In der ersten Stufe wird bis zu einer Temperatur von 1380 °C ein Gesamtatmosphärendruck von ≤ 0,1 MPa mit 0 bis 5 Vol-% Kohlenmonoxid in der Atmosphäre eingestellt. Danach folgt die zweite Stufe, in der bis zu einer Temperatur von 1500 °C bei einem Gesamtatmosphärendruck von ≤ 0,1 MPa der Kohlenmonoxidgehalt in der Atmosphäre auf 10 bis 30 Vol-% erhöht wird. In der anschließenden dritten Stufe wird bis zu einer Temperatur von maximal 2200 °C bei einem Gesamtatmosphärendruck von ≥ 0,1 MPa ein Kohlenmonoxidgehalt in der Atmosphäre von 0 bis 10 Vol-% eingestellt.

Zur Herstellung eines feuerfesten Werkstoffs mit SiAlON/SiC und Kohlenstoff, bei dem das Gemisch weiterhin Siliciumcarbid enthalten kann, wird das Gemisch nach dem Pressen zu Formkörpern in einer überwiegend Stickstoff enthaltenden Atmosphäre bis auf Temperaturen von maximal 2200 °C aufgeheizt. Auch hier wird der Aufheizvorgang in Stufen eingeteilt. In der ersten Stufe wird bis zu einer Temperatur von 1500 °C ein Gesamtatmosphärendruck von ≤ 0,1 MPa mit 10 bis 30 Vol-% Kohlenmonoxid in der Atmosphäre eingestellt. Danach wird in der nächsten Stufe bis zu einer Temperatur von maximal 2200 °C bei einem Gesamtatmosphärendruck von ≥ 0,1 MPa ein Kohlenmonoxidgehalt in der Atmosphäre von 20 bis 50 Vol-% eingestellt.

Vorteilhafterweise wird als Aluminiumoxid γ-Al₂O₃ oder Kaolin eingesetzt.

Ebenfalls vorteilhaft ist, daß zur Herstellung eines feuerfesten Werkstoffs mit SiAlON und Kohlenstoff im Temperaturbereich von 1380 bis 1500 °C ein Kohlenmonoxidgehalt in der Atmosphäre von 10 bis 20 Vol-% eingestellt wird.

Weiterhin ist vorteilhaft, wenn zur Herstellung eines feuerfesten Werkstoffs mit SiAlON und Kohlenstoff im Temperaturbereich von 1500 bis 2200 °C erfindungsgemäß ein Gesamtatmosphärendruck von ≥ 1 MPa und ein Kohlenmonoxidgehalt in der Atmosphäre von 5 Vol-% eingestellt werden.

Vorteilhaft ist es auch, wenn das Kohlenmomoxid der Atmosphäre extern zugeführt wird.

Eine weitere vorteilhafte Variante des Verfahrens besteht darin, daß die Formkörper in einem SiAlON/Aluminiumoxid/Graphit-Pulvergemisch eingebettet sind.

Als Kohlenstoff wird in vorteilhafter Weise Graphit oder Ruß eingesetzt.

Mit dem erfindungsgemäßen Verfahren werden feuerfeste Werkstoffe hergestellt, die aus einem feuerfesten Füllstoff und/oder nur aus der Matrix SiAlON und Kohlenstoff oder SiAlON/SiC und Kohlenstoff bestehen.

Die Zusammensetzung des Si, Al, Al₂O₃- Pulvergemisches als eigentliche Bindephase für den Kohlenstoff und/oder den feuerfesten Füllstoff entspricht der molaren Zusammensetzung des Si_{6-z}Al_{z}o_{z}N_{8-z} (β' ) mit dem gewünschten z-Wert.

Auf der Grundlage thermodynamischer Berechnungen und experimenteller Untersuchungen ist der Prozeß verfahrensseitig und stoffseitig analysiert worden, und es sind daraus Bedingungen für eine effiziente und reproduzierbare Herstellung von SiAlON und Kohlenstoff- oder SiAlON/SiC und Kohlenstoff enthaltenden Kompositen abgeleitet worden.

Die Lösung des Problems besteht in der Einhaltung von definierten Partialdrücken, da andernfalls die gezielte Einstellung der Phasen nicht möglich ist oder deren Stabilität nicht gewährleistet werden kann und außerdem Nebenreaktionen Konzentrationsverschiebungen innerhalb des Zustandsdiagramms zur Folge haben. Die Realisierung erfordert die Aufteilung des thermischen Prozesses in Stufen.

Das durch direkte Nitridierung bis 1500 °C gebildete Si₃N₄ ist nach dieser Behandlung noch nicht vollständig in das β' -SiAlON überführt. Auch eine Verlängerung der Haltezeit entsprechend dem Stand der Technik erbringt keine vollständige Umwandlung und ist durch ablaufende Nebenreaktionen (Bildung von SiC und C-Verlust), die sich in einer scheinbaren Verringerung des Reaktionsgrades (Massenverlust) widerspiegeln, zeitlich begrenzt.

Aus diesem Grund ist eine dritte Stufe eingeführt worden, in der die Temperatur bis maximal 2200 °C, sowie der Gesamtatmosphärendruck auf ≥ 0,1 MPa erhöht wird und der Kohlenmonoxidgehalt in der Atmosphäre auf 0 - 10 Vol-% begrenzt wird.
Durch Einführung einer Haltezeit kann unter diesen Bedingungen die vollständige Umwandlung zum β' -SiAlON auch bei niedrigeren Temperaturen realisiert werden.

Der Grad der Umwandlung ist auch abhängig von der Modifikation der eingesetzten Rohstoffe.
Vorteilhafterweise wird als Aluminiumoxid γ-Al₂O₃ oder ein Alumosilikat, wie z.B. Kaolin, eingesetzt.
Ebenfalls vorteilhaft ist es, einen möglichst reaktionsträgen Graphit einzusetzen.
Beim Einsatz von Alumosilikaten als Quelle für Silicium und Aluminium ist es vorteilhaft, einen reaktionsfreudigen Kohlenstoff einzusetzen, um die karbothermische Reduktion bei möglichst niedrigen Temperaturen einzuleiten.

Die Bildung von Siliciumcarbid ist abhängig von der Reaktivität des zugesetzten Kohlenstoffs.

Um die Reaktionen zur Bildung von SiC in der Nitridierungsstufe nicht zu begünstigen, ist es vorteilhaft, den CO-Partialdruck erst ab 1380 °C, d.h. nach Beendigung des Nitridiervorganges zu erhöhen.

Der erhöhte Gesamtatmosphärendruck in der Stufe 3 verschiebt das Gleichgewicht der Reaktion 3SiC + 2N₂ ⇐⇒ Si₃N₄ + 3CO zugunsten der Si₃N₄-Bildung, was die Ausbeute an β' -SiAlON erhöht.

Mit zunehmendem Gesamtatmosphärendruck verringert sich bei gleichbleibendem P_{N2}/P_{CO}-Verhältnis der SiC-Anteil infolge der Reaktion nach der o.g. Gleichung.

Zusätze an SiC zur Erweiterung des SiAlON/Kohlenstoff-Komposits auf einen SiAlON/SiC/Kohlenstoff-Komposit bleiben beim Nitridieren bis 1500 °C beständig. Erst bei Erhöhung des N₂-Druckes und der Temperatur über 1600 °C wird SiC entsprechend der o.g. Gleichung in Si₃N₄ bzw. Oxinitrid überführt. Zum Erhalt des SiC ist bei einem Gesamtatmosphärendruck von ≥ 0,1 MPa ein Kohlenmonoxidgehalt von 20 - 50 Vol-% in der dritten Stufe einzustellen.

Die Erhöhung des Kohlenmonoxidgehaltes kann vorteilhafterweise durch externe Zuführung zum Prozeß oder unter Ausnutzung der karbothermischen Reduktion durch Eigengeneration erzeugt werden. Dadurch kann der SiAlON-Gehalt schon bei niedrigeren Temperaturen erhöht und gleichzeitig der Anteil an β' -SiAlON mit z-Werten ≥ 2 gesteigert werden.

Bei Einhaltung der erfindungsgemäß gesteuerten Partialdruckverhältnisse wird ein Komposit bestehend aus β' -SiAlON und Kohlenstoff oder β' -SiAlON/SiC und Kohlenstoff hergestellt, der in Verbindung mit einem feuerfesten Füllstoff, wie z.B. Korund, verschiedenen Anwendungsbedingungen angepaßt werden kann. Dazu zählt die komplexe Beanspruchung durch schmelzflüssigen Stahl und Schlacke, die einen korrosionsbeständigen, thermoschockfesten und porenarmen Werkstoff erfordert.

Im weiteren wird die Erfindung an mehreren Ausführungsbeispielen erläutert.

Die Mischungen entsprechend Tabelle 1 von Silicium, Aluminium, Aluminiumoxid und/oder Kaolin sind in Ethanol unter Zusatz von 5 % Siliconharz als Granulier- und Preßhilfsmittel 5 Stunden in einer Planetenkugelmühle unter Alkohol gemahlen worden. Der Graphit ist zur Homogenisierung der Mischung gegen Ende der Mahldauer zugesetzt worden. Nach dem Trocknen und Granulieren der Pulvermischung sind daraus Probekörper gepreßt worden, die nach dem Ausheizen unter Argon nitridiert und gesintert worden sind. Die Phasenbestimmung erfolgte röntgenographisch nach einem quantitativen Verfahren.

**Tabelle 1**

| Beispiele | A | B | C | D | E |
|---|---|---|---|---|---|
| | Mengenanteile in Gew-% | | | | |
| | A3G | G3G | A3Gc | A3GSiC | A3GK |
| Silicium | 42,9 | 42,9 | 39,2 | 26,4 | 10 |
| Aluminium | 4,4 | 4,4 | 4,4 | 2,7 | 3,5 |
| α-Al₂O₃ | 25,5 | - | 20,0 | 15,6 | 56,5 |
| γ-Al₂O₃ | - | 25,5 | - | - | - |
| Kaolin | - | - | 14,4 | - | - |
| Siliciumcarbid | - | - | - | 33,8 | - |
| Graphit | 27,2 | 27,2 | 19,0 | 21,5 | 30 |
| Ruß | - | - | 3,0 | - | - |
| + 5% Siliconharz als Granulier- und Preßhilfsmittel | | | | | |

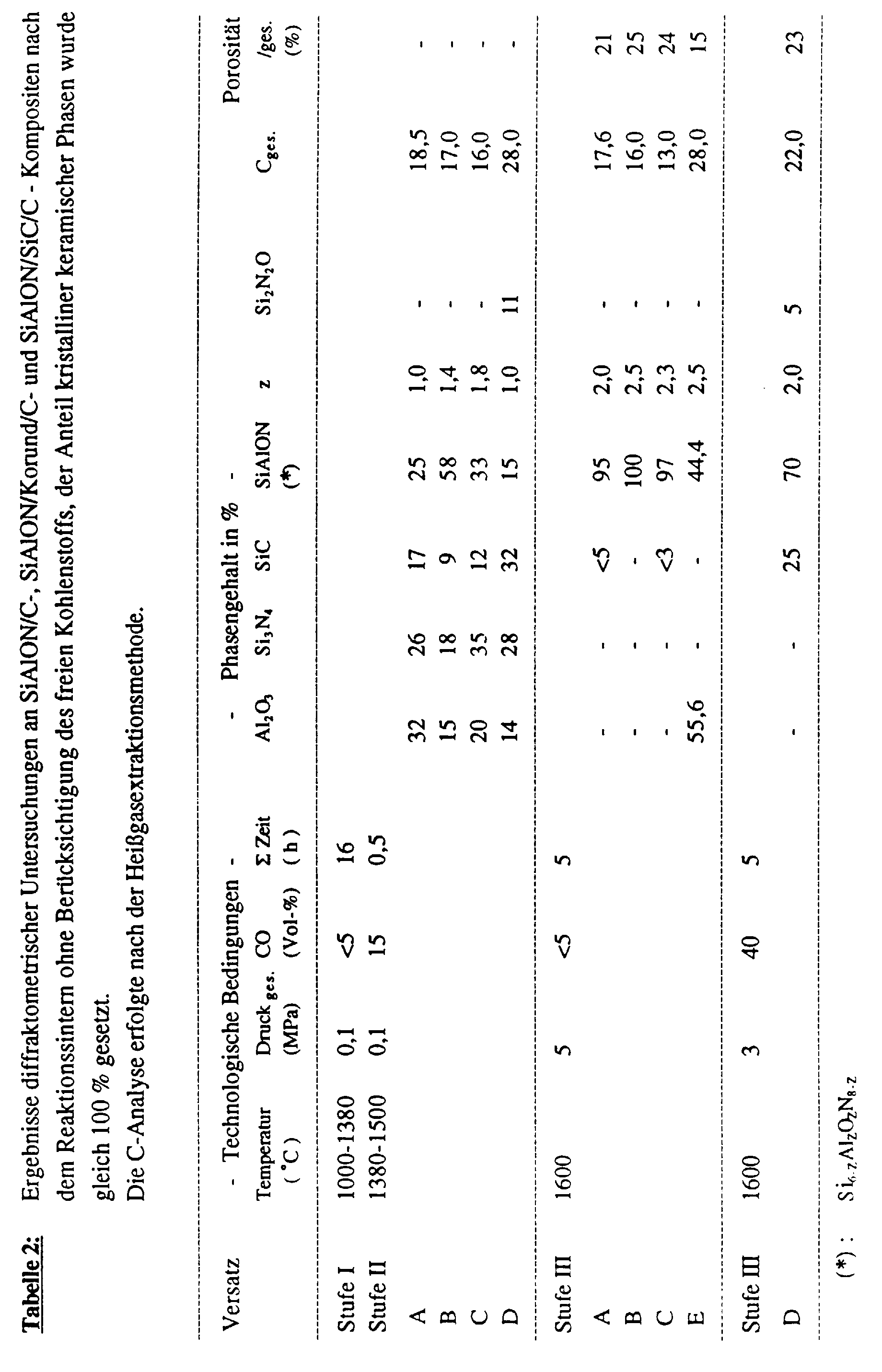

## Patentansprüche

1. Verfahren zur Herstellung von feuerfesten Werkstoffen, enthaltend SiAlON und Kohlenstoff oder SiALON/SiC und Kohlenstoff, dadurch gekennzeichnet, daß zur Herstellung eines feuerfesten Werkstoffs mit SiAlON und Kohlenstoff ein Gemisch, enthaltend Silicium, Aluminium, Aluminiumoxid und Kohlenstoff, nach dem Pressen zu Formkörpern in einer überwiegend Stickstoff enthaltenden Atmosphäre bis auf Temperaturen von maximal 2200 °C aufgeheizt wird, wobei bis zu einer Temperatur von 1380 °C ein Gesamtatmosphärendruck von ≤ 0,1 MPa mit 0 bis 5 Vol-% Kohlenmonoxid in der Atmosphäre eingestellt wird, danach bis zu einer Temperatur von 1500 °C bei einem Gesamtatmosphärendruck von ≤ 0,1 MPa der Kohlenmonoxidgehalt in der Atmosphäre auf 10 bis 30 Vol-% erhöht wird und anschließend bis zu einer Temperatur von maximal 2200 °C bei einem Gesamtatmosphärendruck von ≥ 0,1 MPa ein Kohlenmonoxidgehalt in der Atmosphäre von 0 bis 10 Vol-% eingestellt wird und daß zur Herstellung eines feuerfesten Werkstoffs mit SiAlON/SiC und Kohlenstoff das Gemisch weiterhin Siliciumcarbid enthalten kann, und das Gemisch nach dem Pressen zu Formkörpern in einer überwiegend Stickstoff enthaltenden Atmosphäre bis auf Temperaturen von maximal 2200 °C aufgeheizt wird, wobei bis zu einer Temperatur von 1500 °C ein Gesamtatmosphärendruck von ≤ 0,1 MPa mit 10 bis 30 Vol-% Kohlenmonoxid in der Atmosphäre eingestellt wird und danach bis zu einer Temperatur von maximal 2200 °C bei einem Gesamtatmosphärendruck von ≥ 0,1 MPa ein Kohlenmonoxidgehalt in der Atmosphäre von 20 bis 50 Vol-% eingestellt wird.

2. Verfahren nach Anspruch 1, dadurch gekennzeichnet, daß als Aluminiumoxid γ-Al₂O₃ oder Kaolin eingesetzt wird.

3. Verfahren nach Anspruch 1, dadurch gekennzeichnet, daß zur Herstellung eines feuerfesten Werkstoffs mit SiAlON und Kohlenstoff im Temperaturbereich von 1380 bis 1500 °C ein Kohlenmonoxidgehalt in der Atmosphäre von 10 bis 20 Vol-% eingestellt wird.

4. Verfahren nach Anspruch 1, dadurch gekennzeichnet, daß zur Herstellung eines feuerfesten Werkstoffs mit SiAlON und Kohlenstoff im Temperaturbereich von 1500 bis 2200 °C ein Gesamtatmosphärendruck von ≥ 1 MPa und ein Kohlenmonoxidgehalt in der Atmosphäre von 5 Vol-% eingestellt wird.

5. Verfahren nach Anspruch 1, dadurch gekennzeichnet, daß das Kohlenmonoxid der Atmosphäre extern zugeführt wird.

6. Verfahren nach Anspruch 1, dadurch gekennzeichnet, daß die Formkörper in einem SiAlON/Aluminiumoxid/Graphit-Pulvergemisch eingebettet sind.

7. Verfahren nach Anspruch 1, dadurch gekennzeichnet, daß als Kohlenstoff Graphit oder Ruß eingesetzt wird.

## Claims

1. A process for producing refractory materials containing SiAlON and carbon or SiAlON/SiC and carbon, characterised in that, for the production of a refractory material containing SiAlON and carbon, a mixture containing silicon, aluminium, alumina and carbon, after it has been pressed to form mouldings, is heated in an atmosphere which predominantly contains nitrogen to temperatures of 2200°C maximum, wherein a total atmospheric pressure of ≤ 0.1 MPa is set, with 0 to 5 volume % carbon monoxide in the atmosphere, up to a temperature of 1380°C, thereafter the carbon monoxide content in the atmosphere is increased to 10 to 30 volume %, at a total atmospheric pressure of ≤ 0.1 MPa, up to a temperature of 1500°C, and subsequently a carbon monoxide content of 0 to 10 volume % is set in the atmosphere, at a total atmospheric pressure of ≥ 0.1 MPa, up to a temperature of 2200°C maximum, and that for the production of a refractory material containing SiAlON/SiC and carbon the mixture may additionally contain silicon carbide, and after it has been pressed to form mouldings the mixture is heated in an atmosphere which predominantly contains nitrogen to temperatures of 2200°C maximum, wherein a total atmospheric pressure of ≤ 0.1 MPa is set, with 10 to 30 volume % carbon monoxide in the atmosphere, up to a temperature of 1500°C, and thereafter a carbon monoxide content of 20 to 50 volume % is set in the atmosphere, at a total atmospheric pressure of ≥ 0.1 MPa, up to a temperature of 2200°C maximum.

2. A process according to claim 1, characterised in that γ-Al₂O₃ or kaolin is used as the alumina.

3. A process according to claim 1, characterised in that for the production of a refractory material containing SiAlON and carbon a 10 to 20 volume % of carbon monoxide is set in the atmosthere within the temperature range from 1380 to 1500°C.

4. A process according to claim 1, characterised in that for the production of a refractory material containing SiAlON and carbon a total atmospheric pressure of ≥ 1 MPA is set and a 5 volume % of carbon monoxide is set in the atmosphere within the temperature range from 1500 to 2200°C.

5. A process according to claim 1, characterised in that the carbon monoxide is supplied externally to the atmosphere.

6. A process according to claim 1, characterised in that the mouldings are embedded in a powdered mixture of SiAlON/alumina/graphite.

7. A process according to claim 1, characterised in that graphite or carbon black is used as the carbon.

## Revendications

1. Procédé de fabrication de matériaux réfractaires, contenant du SiALON et du carbone ou du SiALON/SiC et du carbone,
caractérisé en ce que
pour produire un matériau réfractaire avec au SiALON et du carbone on chauffe un mélange, contenant du silicium, de l'aluminium, de l'oxyde d'aluminium et du carbone, après pressage en corps moulés dans une atmosphère contenant principalement de l'azote jusqu'à des températures maximales de 2200°C, tandis que jusqu'à une température de 1380°C, on ajuste une pression totale de l'atmosphère ≤ 0,1 MPa avec de 0 à 5 % en volume de monoxyde de carbone dans l'atmosphère, ensuite jusqu'à une température de 1500°C avec une pression totale de l'atmosphère ≤ 0,1 MPa, on augmente la teneur en monoxyde de carbone dans l'atmosphère à 10 jusqu'à 30 % en volume et ultérieurement jusqu'à une température maximale de 2200°C, avec une pression totale de l'atmosphère ≥ 0,1 MPa on ajuste une teneur en monoxyde de carbone dans l'atmosphère de 0 à 10 % en volume et en ce que pour fabriquer un matériau réfractaire avec du SiALON/SiC et du carbone le mélange peut contenir en outre du carbone du silicium, et le mélange après le pressage en corps moulés est chauffé dans une atmosphère contenant principalement de l'azote jusqu'à des températures maximales de 2200°C, tandis que jusqu'à une température de 1500°C, on ajuste une pression totale de l'atmosphère ≤ 0,1 MPa avec de 10 à 30 % en volume de monoxyde de carbone dans l'atmosphère et ensuite jusqu'à une température maximale de 2200°C avec une pression totale de l'atmosphère de ≥ 0,1 MPa on ajuste une teneur totale de monoxyde de carbone dans l'atmosphère de 20 à 50 % en volume.

2. Procédé selon la revendication 1,
caractérisé en ce que comme oxyde d'aluminium, on utilise γ-Al₂O₃ ou du kaolin.

3. Procédé selon la revendication 1,
caractérisé en ce que
pour produire un matériau réfractaire avec du SiALON et du carbone dans la zone de température de 1380 à 1500°C, on ajuste une teneur de monoxyde de carbone dans l'atmosphère de 10 à 20 % en volume.

4. Procédé selon la revendication 1,
caractérisé en ce que
pour produire un matériau réfractaire avec du SiALON et du carbone dans la zone de température de 1500 à 2200°C, on ajuste une pression totale de l'atmosphère ≥ 1 MPa et une teneur en monoxyde de carbone dans l'atmosphère de 5 % en volume.

5. Procédé selon la revendication 1,
caractérisé en ce que
le monoxyde de carbone de l'atmosphère est alimenté de l'extérieur.

6. Procédé selon la revendication 1,
caractérisé en ce que
les corps moulés sont enrobés dans un mélange pulvérulent de SiALON/oxyde d'aluminium/graphite.

7. Procédé selon la revendication 1,
caractérisé en ce qu'
on utilise comme carbone du graphite ou du noir de carbone.
